# EUROPEAN PATENT APPLICATION

(11) **EP 4 349 166 A1**
(43) Date of publication of application: **10.04.2024**
(21) Application number: 22200286.7
(22) Date of filing: 07.10.2022
(51) Int. Cl.: A01K 63/00, A01K 63/04

(54) **RECIRCULATING AQUACULTURE SYSTEM**

(71) Applicant: FREA Solutions ApS, 7280 Sønder Felding (DK)
(72) Inventor: Jørgensen, Christian Ravn, 7280 Sønder Felding (DK)
(74) Representative: Patrade A/S

(57) **Abstract**

The present invention relates to a recirculating aquaculture system (1), comprising a raceway (2) with a U-shaped channel having an inlet (7) and an outlet (8) separated by a middle wall (5). The outlet (7) is coupled to a water treatment system (13) for filtering out impurities and removing gasses from the outlet water. The water treatment system (13) is further coupled to an oxygenation system (9) for saturating the filtered water. The oxygenation system (9) is further coupled to the inlet (7) for leading saturated water back into the raceway (2). A bypass system (18) is arranged relative to the inlet (7) and the outlet (8), where a portion of the water flow in the raceway (2) is bypassed so water is recirculated back into the raceway (2) via the bypass channel (18).

## Description

### Field of the Invention

The present invention relates to a recirculating aquaculture system comprising at least one raceway, a water treatment system coupled to the raceways, an oxygenation system coupled to the raceways and the water treatment system, where each raceway comprising at least one inlet and at least one outlet, the water treatment system being configured to filter out impurities and to remove gasses from outlet water being led out of the raceway via the outlets, and the oxygenation system being configured to saturate filtered water outputted from the water treatment system and to lead saturated filtered water into the raceways via the inlets.

The present invention further relates to a method of operating the recirculating aquaculture system.

### Background of the Invention

It is known that fish, crustaceans and other aquatic organisms can be produced by aquaculture farming in onshore or offshore fish farms. Onshore fish farming can be done in a constant and controlled environment using recirculating aquaculture systems (RAS). The RAS system may comprise round tanks or raceways in which the fish are located. Control of the feeding process and the water quality, flow and temperature are important to ensure optimal conditions for the fish. Mechanical and biological filters may be used to remove sediments and/or toxic gases from the water, which is then used for other applications. The water is further degassed so that CO₂ and other harmful gasses are removed from the water. Finally, the clean water is saturated with oxygen before it is led back into the tanks or raceways.

It is known that round tanks may have a funnel shaped bottom surface for effective removal of sediments. However, round tanks take up more space compared to raceways. Water is pumped through a pipe system for round tanks and thus more energy is required, whereas gravity is used to exchange the water in raceways. Problems also exist with effectively extracting the fish from the tanks without using nets or a separate water pumping unit.

It is also known that raceways allow for an effective exchange of water due to their straight channel design. However, raceways have a lower flow velocity in the channel compared to round tanks. Furthermore, known raceways do not allow fish to swim in circles as the raceways are not open ended.

Fish will, under normal conditions, swim up against the flow of water. In round tanks, the water flow circulates endlessly around the tank and thus the fish can also swim endlessly around the tank. Raceways has inlets at one end and outlets at another end. The fish can thus only swim up against the stream until they meet the inlet grid and then they can only stand still in front of the grid, which is inappropriate in relation to the fish's exercise and well-being. Feed in the raceway will drift along the current and thus end up at the end with the outlets. The fish in the raceway will then have to swim in the direction with the current in order to get feed accumulating at the outlet end, this is unnatural to fish thus it is much preferred that the fish can swim endlessly against the flow of water as in a round tank.

In conclusion, there is a need for an improved recirculating aquaculture system that is flexible and allows for an improved operation.

### Object of the Invention

An object of the present invention is to provide a system and method that solves the abovementioned problems.

An object of the present invention is to provide a system and method that allow water to recirculate within the raceway and also allow fish to also recirculate within the raceway.

An object of the present invention is to provide a system and method that allows for an effective extraction of fish from the raceway.

### Description of the Invention

An object of the invention is achieved by a recirculating aquaculture system according to claim 1, comprising:
- a raceway adapted to receive and hold fish, each raceway comprising at least one water inlet and at least one water outlet, wherein the raceway has a rectangular profile extending in a longitudinal direction and further in a transverse direction, wherein the raceway further comprising a middle wall extending in the longitudinal direction and separating the water inlets and the water outlets, thereby forming a U-shaped channel,
- a water treatment system coupled to the raceway, the water treatment system being configured to remove impurities, particles and gasses from water being led out of the raceway via the water outlets;
- an oxygenation system coupled to the raceways and the water treatment system, the oxygenation system being configured to oxygenate at least part of the water outputted from the water treatment system and to lead the oxygenated water into the raceways via the at least one water inlet,
- at least one bypass system arranged relative to the water inlets and water outlets of the at least one raceway, the at least one bypass system being configured to bypass a water flow in that raceway so that a portion of the water is bypassed from the water outlets to the water inlets.

This provides an improved recirculating aquaculture system which allows water to recirculate within the raceway to allow fish to also recirculate within the raceway. The present recirculating aquaculture system has a compact, modular design that allows the configuration to be adapted to different applications.

The recirculating aquaculture system comprises one or more raceways adapted to receive and hold fish. Each raceway has a rectangular shape extending in the longitudinal direction and further in the transverse direction. The raceway comprises one or more water inlets and one or more water outlets. The water inlets and the water outlets are separated by at least one middle wall extending in the longitudinal direction, thereby forming a U-shaped raceway channel. The present recirculating aquaculture system is preferably suited for fish farming. The raceway channel is bend 180 degrees by middle wall such that the outlets and inlets are placed next to each other but separated by the middle wall. Thereby, a U-shaped channel is formed.

However, the present recirculating aquaculture system may potentially be used for farming crustaceans, molluscs, algae, lotus or other aquatic organisms or plants. The recirculating aquaculture system may advantageously be adapted for different aquacultural applications.

The recirculating aquaculture system further comprises at least one water treatment system and at least one oxygenation system, both coupled to the respective raceways. This allows outlet water from the raceway to be cleaned and oxygenated before being led back into the raceway. The water treatment system and the oxygenation system are arranged relative to the raceway to form a compact, modular design that takes up less space. The recirculating aquaculture may be configured to close of the water treatment system and circulate the outlet water directly to the at least one oxygenation system such that the muddy taste can be removed from the fish before removing the fish. The skilled person would know how to provide such a configuration.

At least a portion of the water passing through the raceway is bypassed using a bypass system arranged relative to the water inlets and the water outlets, respectively. The bypass system is adapted so that at least water can pass through the bypass channel. Preferably, the bypass system is adapted so both water and fish can pass through the bypass system. Thereby bypassing the water inflow (at the water inlets) and the water outflow (at the water outlets) so that some of the water is recirculated within the raceway while the remaining water is exchanged. This further enables fish to swim in circular movements within the raceway i.e. it enables the fish to swim endlessly like in a round tank.

According to one embodiment, the at least one water inlet and the at least one water outlet are positioned at a joint end of the rectangular profile.

The water inlets and optionally the water outlets may be arranged at a joint end of the raceway in the longitudinal direction, where the middle wall may be connected to this joint end. The middle wall may further be connected to an opposite end of the raceway and comprise one or more raceway openings for enabling water and, optionally, fish to pass through. Alternatively, a terminated end of the middle wall may be arranged at a distance from the end sidewall to form a uniform raceway opening. The corners at the opposite end of the raceway may be rounded or chamfered, or the profile of the opposite end may be curved, e.g., U-shaped, to allow for an optimal water flow and reduce the energy consumption.

Optionally, the respective water inlets and water outlets may also be offset relative to each other in the longitudinal direction. Optionally, the raceway may also comprise two or more middle walls arranged to form a zig-zag shaped raceway channel. The length, width and height of the raceway, and the channel thereof, may be adapted to meet the requirements for different aquacultural applications.

According to one embodiment, the bypass system is arranged within the raceway and positioned downstream relative to the water inlets thereof and/or upstream relative to the water outlets thereof.

The bypass system may be arranged within the raceway and positioned relative to the water inlets and the water outlets, respectively. For example, the local inlet of the bypass system may be arranged upstream relative to the water outlets so that the water outflow may be bypassed before exiting the water outlets. For example, the local outlet of the bypass system may be arranged downstream relative to the water inlets so that the bypassed water flow may mix with the water inflow after entering the water inlets. This allows for a simple and cheap configuration of the bypass system.

The water inlets and/or the water outlets may be configured to enable only water to flow through while retaining the fish inside the raceway. One or more mechanical sieves or screen enclosures may be arranged at the respective water inlets and/or water outlets. inlet water may be led into the raceway via the water inlets while outlet water may be led out of the raceway via the water outlets. The dimensions of the water inlets and/or water outlets may be adapted to different applications and/or flow velocities.

The grids may be angled relative to a vertical axis as this will ease collection of dead fish. This is particular true for the grid at the outlet as the flow will cause the dead fish to be dragged towards the top of grid.

The local outlet of the bypass system may be arranged in the output channel of the oxygenation system. This allows the bypassed water to mix with the saturated water before entering the raceway. Alternatively or additionally, the local inlet of the bypass system may be arranged in the input channel of the water treatment system. This allows the outlet water to enter the bypass system after exiting the raceway. The position of the local inlet and outlet of the bypass system may be adapted to different configuration of the recirculating aquaculture system. Optionally, the local outlet of the bypass system may be arranged downstream to the water inlet and in most cases as close to the water inlet as possible such that the fish can swim in circles in raceway and utilise the entire raceway. Similarly, the local inlet of the bypass system is upstream to the water outlet and in most cases as close to the water outlet as possible such that the fish can swim in circles in raceway and utilise the entire raceway. If the inlet of the bypass system is not close or at the water inlet, then some fish may be trapped in pocket where the fish are not incited to swim in circles because fish will swim upstream and if that stream does not lead through the bypass then the fish will not swim in circles within the raceway.

According to one embodiment, the bypass system comprises a bypass opening in the middle wall, wherein the bypass opening is arranged near or at the at least one water inlet.

The bypass opening in the middle wall essential transforms the U-shaped channel into a D-shape where the fish can swim endlessly as the fish swim from the inlet side to the outlet side through the bypass opening and afterwards the fish swim the long way against the flow of water from the outlet side to the inlet side along the raceway. It is important to ensure that dead fish are not dragged endlessly around the race way thus the bypass opening should be below the water level during normal use i.e. during production of the fish. In some cases, the top of the bypass opening is 100 mm or more below the water level during normal use. Likewise, sediment should not flow endlessly along the raceway and thus, the bypass opening should in most embodiments be above the bottom of the raceway such as 200 mm or 300 mm or more above the bottom of the raceway at the middle wall.

It is important to avoid backflow i.e., a flow from the inlet side (i.e. side with inlets) to the outlet side (i.e. side with outlets). In order to avoid this, the water flow at the bypass opening should be higher at the inlet side respectively relative to the outlet side as this would cause a water flow from the outlet side to the inlet side through the bypass opening as desired. This can be achieved by various embodiments.

In one embodiment, the middle wall is not positioned exactly in the middle of the raceway. Instead, the middle wall is positioned such that the cross-sectional area of the inlet side is smaller than the cross-sectional area of the outlet side. The volume flow into and out of the raceway will be the same and thus the water flow on the inlet side will be greater than the water flow on the outlet side. The cross-sectional area of the outlet side may be 5 %, 10 %, or 15 % or greater, or 5 to 25 % greater than the cross-sectional area of the inlet side.

The bypass system may comprise one or more bypass openings arranged in the middle wall. The bypass openings may be located near or at the joint end of the raceway, optionally at a distance from the joint end or water inlets/outlets. The bypass openings together form a bypass channel coupled to the U-shaped channel. This allows a portion of the water flow to flow through the bypass channel so that some of the water is recirculated within the raceway.

According to one embodiment, the bypass opening is positioned in an upper half of the middle wall, wherein the bypass opening is below a water surface during normal operation.

The bypass opening(s) may be arranged below the water surface during normal operation so that the water and, optionally, the fish is able to flow through the bypass opening. Preferably, the bypass opening(s) may be arranged in an upper half of the middle wall, thereby reducing the amount of impurities and particles passing through the bypass channel. These impurities will for the most part be on the bottom of the fish tank. The bypass opening will in most cases still be below the water level during normal operation (i.e. normal operation is for example not during rearing where the water level is lowered). Dead fish will lie at the water surface thus it is prevented that dead fish will circulate by bypass opening being below the water level during normal operation.

The bypass opening does not have to be limited to the upper half of the middle wall. If the water level during normal operation has a height H at the middle wall relative to the bottom at the middle wall, then the bypass opening may extend between OH to 0.95H, or 0.05H to 1.05H or 0.05H to 1.05H or 0.1H to 0.9H or 0.2H to 0.8H or 0.2H to 0.9H or 0.3H to 0.9H or 0.4H to 0.9H or 0.3H to 0.75H. It is much preferred that the opening does not go entirely down to the bottom as this would enable endless circulation of sedimentation and at the same time it is much preferred that the opening does not go above the height of water during normal use since this would enable endless circulation of the fish.

During rearing or outfishing, the water level may be lowered relative to a normal water level at normal operation. The bypass opening(s) may thus be located above the reduced water level so that water as well as fish are not able to bypass the normal water flow. Once the rearing or outfishing process is complete, the water level may be raised to the normal water level, thus enabling water and, optionally, fish to bypass the normal water flow again.

According to one embodiment, the bypass system further comprises a screen enclosure adapted for partially enclosing the bypass opening thereby preventing water flow from the water inlets to the water outlet through the bypass opening.

The bypass system may comprise one or more screen enclosures arranged relative to the local inlets and/or outlets of the bypass channel. For example, a screen enclosure may be arranged at the local inlet to guide a portion of the water outflow into the bypass channel. For example, a screen enclosure may be arranged at the local outlet to prevent the water inflow from entering the bypass channel. This also allows water to be guided into and out of the bypass system while reducing the turbulence effect in the water flow. This will further lure the fish through the bypass channel due and as a consequence the fish will swim in circles similar to a round RAS system while still having the positive features of a raceway.

According to one embodiment, the bypass system further comprises a nozzle, optionally a jet nozzle or throttle, arranged within the screen enclosure. The nozzle will increase the water velocity locally within the screen enclosure and this will drag more water close to the outlet through the bypass channel and as a consequence more fish will be lured to swim in circles in the raceway. This increases the likelihood of the fish swimming endlessly. The jet nozzle will generate a local increase in water flow and fish prefer to swim against the water flow thus it is likely that the fish will swim against the local high flow and swim through the bypass opening thereby the fish will swim endlessly.

One or more nozzles may be arranged relative to the bypass channel and the respective screen enclosure. Preferably, at least one nozzle may be arranged at the local outlet of the bypass channel. The nozzles may be configured to generate an injector effect in the water inflow in the raceway. The shape and dimensions of the respective nozzles may be adapted to different flow velocities and/or injection effects.

The nozzle may be passively or actively operated during normal operation. For example, local fins or openings may be arranged on the nozzle and shaped to generate the injection effect. For example, a propeller or pump with a protective screen may be used to generate the injection effect. For example, a jet nozzle may be used to generate the injection effect. Other solutions may be used to generate the injector effect.

According to one embodiment, the nozzle comprises a duct extending from an upstream side of the water inlets and at least partially past the bypass opening.

The nozzle may comprise a duct with a duct portion and a cone shaped portion forming a tapered end. The thickest end of the cone shaped portion may be connected to one end of the duct portion. The other end of the duct portion may be connected to a local opening in the joint end sidewall. Water may be led into the duct from the output channel of the oxygenation system. This provides a simple and cheap configuration of the nozzle.

The duct portion may extend from the local opening in the joint end sidewall and past an upstream end of the bypass opening. The cone shaped portion may extend partly or fully beyond a downstream end of the bypass opening. Alternatively, the thinnest end of the cone shaped portion may be aligned with the downstream end of the bypass opening in the transverse direction. This reduces the risk of water from the nozzle entering the bypass channel and allows for an optimal injector effect.

In another embodiment, the flow direction at the inlets and outlets is modified to increase the likelihood of endless swimming. The inlets and outlets are formed of sieves or grids which sieves or grids are angled such that at least part of the water flow is non parallel to the longitudinal direction of the raceway. In particular the sieves or grids of the inlets and outlets angled furthest from the bypass opening are substantially parallel to the longitudinal direction such that the water flow is substantially parallel to the longitudinal direction. However, the sieves or grids of the inlets and outlets are near the bypass outlet angled in opposite directions from the respective inlets and outlets. The sieves or grids of the inlets close to the bypass are angled away from the bypass opening such that a water flow away from the outlet is generated and at the same time the sieves or grids of the outlets close to the bypass are angled away from the bypass opening such that a pressure difference is formed between the inlet side and the outlet side causing a flow of water from the outlet side to the inlet side.

According to one embodiment, the duct comprises a tapered end shaped to increase a water flow velocity out of the nozzle.

The thinnest end of the cone shaped portion may be closed-off or open-ended and may face away from the duct portion. Optionally, a plurality of openings, fins, indentations, or the like may be arranged in the cone shaped surface to guide the passing water along the cone shaped surface. For example, a fin may be arranged on the exterior surface adjacent to an opening to guide water exiting the duct into the water inflow. This causes the passing water to exit the nozzle at a higher water velocity, which in turn entrains the bypass water from the bypass channel. Thereby enabling the bypassed water to mix with the saturated water from the water inlets.

According to one embodiment, the raceway further comprising a raceway bottom surface arranged at a sloping angle in the transverse direction relative to the middle wall, such that the raceway bottom surface is at a lowest gravitational level at the middle wall.

The raceway may comprise a raceway bottom surface extending in the longitudinal direction and further in the width direction. The raceway bottom surface may extend along the entire length of the U-shaped channel, such that a local raceway bottom surface may be formed on both sides of the middle wall. One or both local raceway bottom surfaces may be arranged at a sloping angle relative to the middle wall, such that the local raceway bottom surface may have a lowest gravitational level and a highest gravitational level. Preferably, one or both local raceway bottom surfaces may slope inwards such that lowest gravitational level is located at the middle wall. This allows impurities and particles not removed by the water treatment system to accumulate along the middle wall. This also guide the fish towards the middle wall during the outfishing process, thereby allowing for an easier removal of the fish.

Optionally, one local raceway bottom surface may slope inwards such that lowest gravitational level is located at the middle wall while another local raceway bottom surface may be arranged perpendicularly relative the middle wall. Optionally, the local raceway bottom surfaces may have the same sloping angle, or different sloping angles, in the longitudinal direction and/or in the transverse direction.

According to one embodiment, the raceway comprises an extraction outlet located near the water inlets and/or near water outlets, the extraction outlet being positioned at the raceway bottom surface at or near the middle wall.

The recirculating aquaculture system further comprises one or more extraction outlets positioned at the raceway bottom surface at or near the middle wall. Optionally, two or more extraction outlets may be positioned along the local raceway bottom surface in the longitudinal direction. This allows for an easy and simple extraction of the fish during the outfishing process, since any remaining fish may be easy be moved to the extraction outlets. This also allows for an easy cleaning of the raceway bottom surface.

An extraction outlet may be arranged on one or both sides of the middle wall, thus allowing fish to be extracted from one or both sides of the middle wall. Each extraction outlet may comprise a funnel connected to a pump system and further to a storage tank, a processing plant or an output terminal. Alternatively, a common funnel may extend across the middle wall, such that fish may be extracted from one or both sides. A common pipe system and pump system may be connected to the individual funnels, thereby reducing the total number of components needed.

The individual extraction outlets may be operated, such as opened or closed, individually or simultaneously from a control unit of the recirculating aquaculture system. Alternatively, the opening and closing of the extraction outlets may be performed manually. The control unit may further control the operation of the water treatment system, the oxygenation system and other components of the recirculating aquaculture system. This allows workers to monitor and regulate the water conditions thereof via the control unit.

An object of the present invention is also achieved by a recirculating aquaculture system according to claim 12, comprising:
- a raceway adapted to receive and hold fish, each raceway comprising at least one water inlet and at least one water outlet, wherein the at least one raceway has a rectangular profile extending in a longitudinal direction and further in a transverse direction, wherein the raceway further comprising a middle wall extending in the longitudinal direction and separating the water inlets and the water outlets, thereby forming a U-shaped channel,
- an oxygenation system coupled to the raceway, the oxygenation system being configured to oxygenate at least part of the water outputted from the raceway and to lead the oxygenated water into the raceway via the at least one water inlet,
wherein the raceway comprises an extraction outlet at a raceway bottom surface and the oxygenation system comprises an oxygenation chamber having a chamber bottom surface wherein the chamber bottom surface is at a lower gravitational level than the raceway bottom surface.

This provides an improved recirculating aquaculture system which allows for an effective extraction of fish from the raceway. The present recirculating aquaculture system may also be used for effectively rearing of fish, as the water treatment system may be omitted or simply bypassed using another bypass system than the one described above.

The raceway and other components of the recirculating aquaculture system may be configured as described above.

The oxygenation system comprises one or more oxygenation units, each comprising an input channel, an oxygenation chamber and an output channel. The number of oxygenation units may be adapted to different applications. The input channel is adapted to receive outlet water from the raceway or filtered water from a water treatment system. The input channel is connected to the oxygenation chamber via one or more first passageways. The first passageway may be an overflow, a chamber wall opening, a conduit or the like. The oxygenation chamber comprises means for saturating the inputted water with oxygen, where the oxygen is supplied from an interior or external source. The oxygenation chamber is connected to the output channel via one or more second passageways. Similarly, the second passageway may be an overflow, a chamber wall opening, a conduit or the like. This provides a simple and compact, modular design.

The means for saturating the inputted water with oxygen may simply be one or more hoses or pipes, each with a nozzle for disbursing the oxygen into the water. The means may also comprise a local wall or screen arranged within the oxygenation chamber, the local wall or screen may comprise a plurality of openings for introducing oxygen into the water. Alternatively, oxygen is introduced into an area adjacent to the local wall or screen and water is distributed over this area via the openings. In other embodiments, one or more oxygen cones are used for disbursing the oxygen into the water. The saturated water may then be guided into the output channel via the second passageways. This ensures an effective saturation of the filtered water.

At least the oxygenation chamber has a chamber bottom surface which is at a lower gravitational level than the raceway bottom surface. Preferably, the entire oxygenation unit may have a bottom surface which is at a lower gravitational level than the raceway bottom surface. This ensures a continued supply of saturated water at all times, even if the water level is lowered to the raceway bottom surface. This is particularly useful during the outfishing process.

According to one embodiment, the recirculating aquaculture system further comprises a water treatment system coupled to the raceway and the oxygenation system, the water treatment system being configured to remove impurities, particles and gasses from the water being led out of the raceway via the at least one water outlet.

The water treatment system may comprise one or more water treatment units, each comprising an input channel, a water treatment chamber and an output channel. The number of water treatment units may be adapted to different applications. The input channel is adapted to receive outlet water from the raceway. Optionally, a collection system configured to collect impurities and particles may be arranged within the input channel or the water treatment chamber. The collection system may be connected to a pipe system and/or pump system to remove the accumulated sludge. The input channel is connected to the water treatment chamber via one or more first passageways. The first passageway may be an overflow, a chamber wall opening, a conduit or the like.

The water treatment chamber may comprise at least one mechanical filter unit, and/or at least one biological filter unit, or/and at least one drum filter unit or any combinations thereof. Preferably, the water treatment chamber may comprise one or more biological filters configured for degassing of the inputted water. The configuration and function of biological filters are known to the skilled person and will not be described in detail. The configuration of the water treatment chamber may be adapted or modified to ensure proper water conditions. The water treatment chamber is connected to the output channel via one or more second passageways. Similarly, the second passageway may be an overflow, a chamber wall opening, a conduit or the like. This provides a simple and compact, modular design.

According to one embodiment, a water treatment bypass adapted for bypassing the water treatment system and leading water from the water outlets to the oxygenation system.

The water treatment system may be bypassed using one or more water treatment bypasses, each adapted to lead outlet water from the water outlets and directly to the oxygenation system. The water treatment bypass may be a bypass opening arranged in a sidewall separating the input channel of the oxygenation system and the input channel of the water treatment system. A moveable cover may be arranged relative to the bypass opening such that it can be opened or closed, either remotely via the control unit or manually. This is suitable for off-flavouring of the fish during production to reduce the goemin and/or methylisoborneol content in the fish.

Optionally, one or more plates may be used to close off the input channel of the water treatment system upstream relative to the bypass openings. This prevent water from further entering the water treatment chamber, such that the all the outlet water is bypassed and led into the oxygenation system.

According to one embodiment, the raceway bottom surface is arranged at a sloping angle in the transverse direction relative to the middle wall, such that the raceway bottom surface is at a lowest gravitational level at the middle wall.

The bottom surface of the raceway may be configured as described above. This allows impurities and particles not removed by the water treatment system to accumulate along the middle wall. This also guide the fish towards the middle wall during the outfishing process, thereby allowing for an easier removal of the fish.

According to one embodiment, the extraction outlet is positioned near the water inlet and/or near the water outlet.

The extraction outlets of the raceway may be positioned as described above. This allows any remaining fish to easily be moved to the extraction outlets. This also allows for an easy cleaning of the raceway bottom surface.

According to one embodiment, a first extraction outlet is arranged at one side of the middle wall and a second extraction outlet is arranged at the opposite side of the middle wall, or a common extraction outlet extended across both sides of the middle wall.

The extraction outlets of the raceway may be configured as described above. This allows for an easy and simple extraction of the fish during the outfishing process, since the fish may be extracted from one or both sides of the middle wall.

According to one embodiment, the water treatment bypass comprises valves for opening or closing a bypass flow path from the water outlets to the oxygenation system.

The water treatment bypass may also comprise one or more valves coupled to the input channel of the water treat system and the oxygenation system, respectively. The valves may be adapted to open or close one or more bypass flow paths, such that outlet water is able to bypass the water treatment chamber.

According to one embodiment, the oxygenation system comprises a pump for pumping water into the oxygenation chamber.

A pump may be arranged in the input channel of each oxygenation unit, where the pump is configured to pump the inputted water into the oxygenation chamber thereof. This is preferred if the bottom surface of the oxygenation unit is at a lower gravitational level than the raceway bottom surface.

According to one embodiment, the oxygenation chamber extends from below the raceway bottom surface to above the water level of the raceway during use.

When using a pump as described above, water may enter the oxygenation chamber at a top level and gravity may be used to distribute the water over the oxygen rich area. This allows for a larger oxygenation chamber, which may output higher saturated water per time unit than conventional oxygenation systems.

According to one embodiment, the oxygenation chamber further comprising a platform dividing the oxygenation chamber in an upper part and a lower part, wherein the platform comprises a plurality of nozzles, and the oxygenation chamber comprises an oxygen supply having a gas outlet below the platform.

The means for saturating the inputted water with oxygen may preferably comprise a platform dividing the oxygenation chamber into an upper part and a lower part, where water may be inputted to the upper chamber part and water may be outputted via the lower chamber part. The platform may comprise a plurality of openings or nozzles adapted to distribute water over an oxygen rich area formed in the lower chamber part. The oxygenation chamber may further comprise an internal or external oxygen supply having a gas outlet located below the platform in the lower chamber part for introducing oxygen into the oxygen rich area. The saturated water is collected at the bottom of the lower chamber part and then led to the output channel.

Optionally, a local pump unit may be arranged in the oxygenation unit and coupled to the input and output channels thereof. This allows a portion of the inputted water to bypass the oxygenation chamber and be pump directly into the output channel.

An object of the present invention is further achieved by a modular recirculating aquaculture system according to claim 22, comprising a first recirculating aquaculture unit and at least a second recirculating aquaculture unit arranged adjacent to the first recirculating aquaculture unit, wherein at least one of the first and second recirculating aquaculture units is configured as described above.

This provides an improved recirculating aquaculture system comprising a number of recirculating aquaculture units, each having a compact, modular design. The recirculating aquaculture units are arranged adjacent to each other in the longitudinal or transverse direction to save space. The number of recirculating aquaculture units may be adapted to different applications, such as rearing, off-flavouring, growing, etc., and/or different types of fish or organisms.

An object of the present invention is even further achieved by a method, according to claim 23, of removing fish from a recirculating aquaculture system described above, comprising the steps of:
- activating the water treatment bypass;
- lowering a water level inside the raceway by controlling water flow through the extraction outlet, while
- removing fish through the extraction outlet.

This provides an improved method of removing fish from a recirculating aquaculture system compared with conventional methods. The present method allows for a fast and effective method of extracting fish from the present recirculating aquaculture system described above.

Initially, the water treatment bypass is activated so that outlet water bypasses the water treatment chamber and is led directly to the oxygenation chamber. Optionally, plates may be positioned in the input channel of the water treatment system to close off the input channel.

The extraction outlets are further opened so that the fish can be removed from the raceway. The water level is then reduced from a normal water level towards the raceway bottom surface using gravity or a pump system. The water may be led out via the extraction outlets and/or a separate water outlet.

The fish are then removed via the extraction outlets as the water level is lowered. The fish is further guided towards the middle wall due to sloping angle of the raceway bottom surface. The water removal is finally stopped, and any remaining fish may be moved to the extraction outlets.

Prior to filling the raceway with new water, the recirculating aquaculture system is cleaned and, optionally, the biological filters are placed. The recirculating aquaculture system is now ready for use again.

### Description of the Drawings

Embodiments of the invention will be described in the figures, whereon:
- Fig. 1: illustrates an exemplary embodiment of a recirculating aquaculture system according to the present invention,
- Fig. 2: illustrates a cross-section of the raceway along line A-A,
- Fig. 3: illustrates a cross-section of the raceway and water treatment system along line D-D,
- Fig. 4: illustrates a cross-section of the oxygenation system along line C-C,
- Fig. 5: illustrates a cross-section of the water treatment system along line F-F,
- Fig. 6: illustrates a cross-section of the bypass system of fig. 2,
- Fig. 7: illustrates an exemplary embodiment of a modular recirculating aquaculture system according to the present invention;
- Fig. 8: illustrates another embodiment of the bypass opening; and
- Fig. 9: illustrates an embodiment for controlling water flow through the bypass opening.

### Detailed Description of the Invention

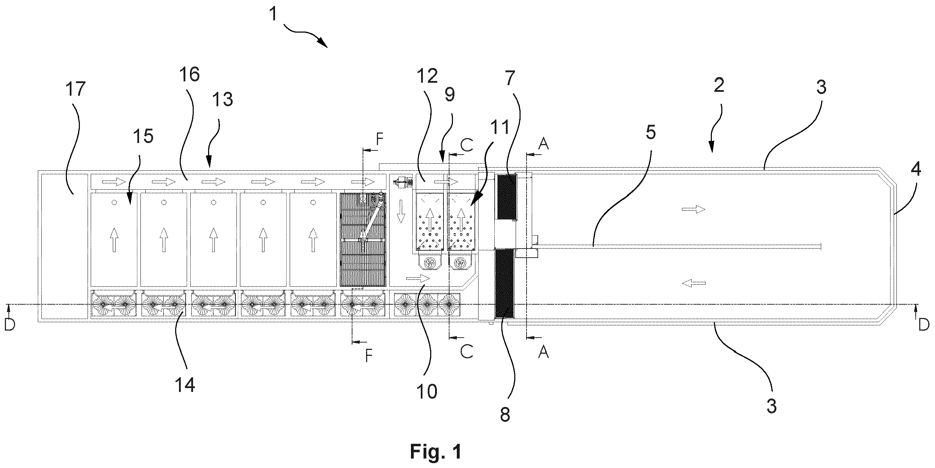

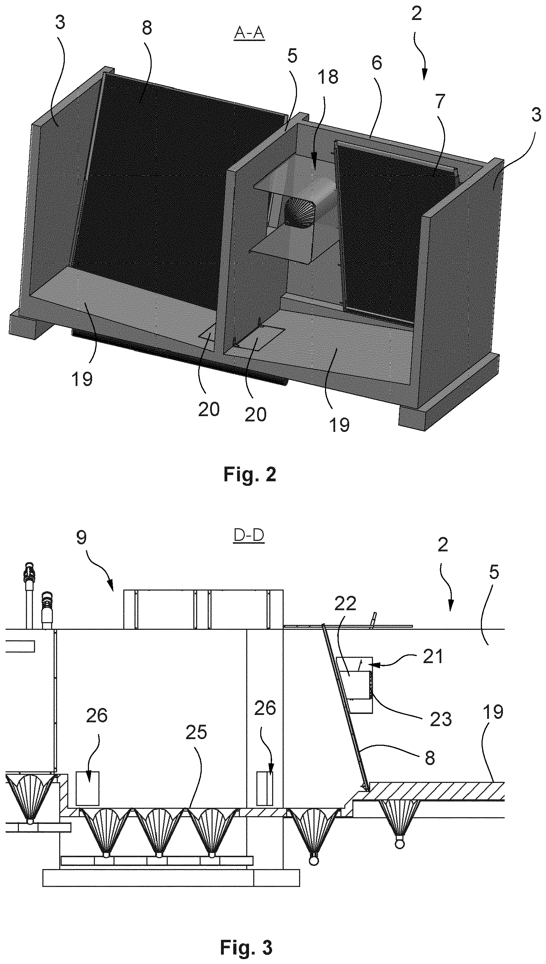

Fig. 1 illustrates an exemplary embodiment of a recirculating aquaculture system 1 according to the present invention. The recirculating aquaculture system 1 comprises a rectangular shaped raceway 2 formed by two opposite outer sidewalls 3 connected to an end sidewall 4. A middle wall 5 is connected to a joint end (shown in fig. 2) of the raceway 2 and terminates a distance from the end sidewall 4, thereby forming a U-shaped channel.

The raceway 2 comprises at least one water inlet 7 for leading saturated water into the raceway 2. Further, the raceway 2 comprises at least one water outlet 8 for leading outlet water out of the raceway 2.

An oxygenation system 9 is arranged relative to the raceway 2 and configured to saturate filtered water with oxygen back into the raceway 2 via the water inlets 7. Here, two oxygenation units are shown but more or less oxygenation units may be used. The oxygenation system 9 comprises an input channel 10, an oxygenation chamber 11 and an output channel 12.

A water treatment system 13 is further arranged relative to the raceway 2 and the oxygenation system 9. Here, six water treatment units are shown but more or less water treatment units may be used. The water treatment system 13 comprises an input channel 14, a water treatment chamber 15 and an output channel 16.

The recirculating aquaculture system 1 comprises a control station 17 in which a control unit is implemented, wherein the control unit is configured to monitor and control the operation of the recirculating aquaculture system 1 to maintain good water conditions.

Fig. 2 illustrates a cross-section of the raceway 2 along line A-A. The water inlets 7 and a water bypass system 18 are arranged on a joint end sidewall 6. The water outlets 8 are aligned with the water inlets 7 in the longitudinal direction. Here, the water inlets 7 and the water outlets 8 are provided as grid screens with perforations.

The water bypass system 18 is arranged within the raceway 2 and positioned at a top half of the middle wall 5. The water bypass system 18 is configured to bypass a portion of the water outflow such that some of the water flow in the raceway 2 is recirculated while some of the water flow is exchanged.

The raceway 2 comprises a raceway bottom surface 19 extending between the outer sidewall 3 and the middle wall 5. The raceway bottom surface 19 is arranged at a sloping angle relative to the middle wall 5 as illustrated. The lowest gravitational level of the raceway bottom surface 19 is located at the middle wall 5 and highest gravitational level of the raceway bottom surface 19 is located at the outer sidewall 3. This also improves removal of sediment similar to round tanks having a lowest gravitational point in the middle of the round tanks.

An extraction outlet 20 is arranged in the raceway bottom surface 19 near the water inlets 7 or water outlets 8. The extraction outlet 20 is located at the middle wall 5. Here, two extraction outlets 20 are illustrated, one on each side of the middle wall 5. The extraction outlets 20 may be formed by a common funnel connected to a pipe system for removal of the fish.

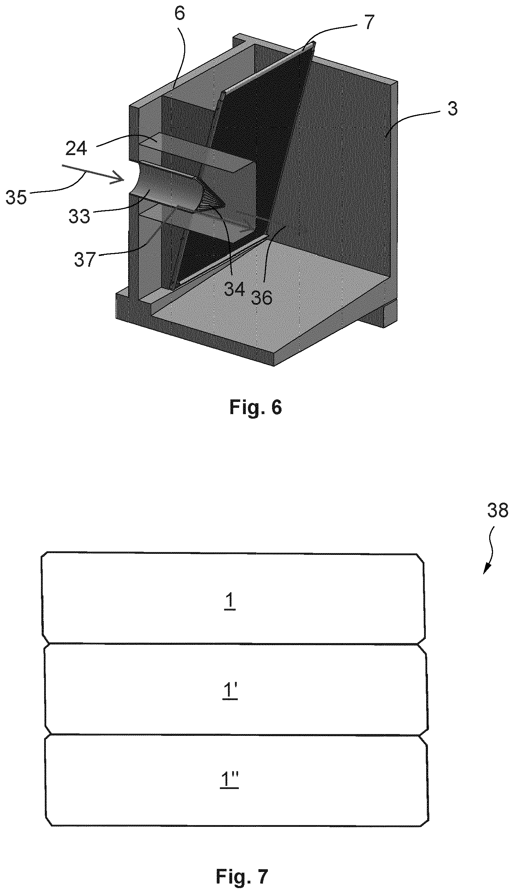

Fig. 3 illustrates a cross-section of the raceway 2 and water treatment system 13 along line D-D. The water bypass system 18 comprises a bypass opening 21 arranged in the middle wall 5, which has an upstream end facing the joint end sidewall 6 and a downstream end facing the end sidewall 4. The water bypass system 18 comprises a screen enclosure (shown in figs. 2 and 6) arranged relative to the bypass opening 21. A nozzle is arranged within the screen enclosure, which extends from a local opening (shown in fig. 6) in the joint end sidewall 6 and partly past the downstream end of the bypass opening 21.

The raceway bottom surface 19 is located at a higher gravitational level than the bottom surface 25 of the oxygenation system 9. Here, the bottom surface of a portion of the input channel 14 is located at the same gravitational level as the bottom surface 25 of the oxygenation system 9.

A water treatment bypass is coupled to the input channel 14 of the water treatment system 13 and the input channel 10 of the oxygenation system 9. Here, the water treatment bypass comprises two bypass openings 26 arranged in the sidewall separating the two input channels 10, 14.

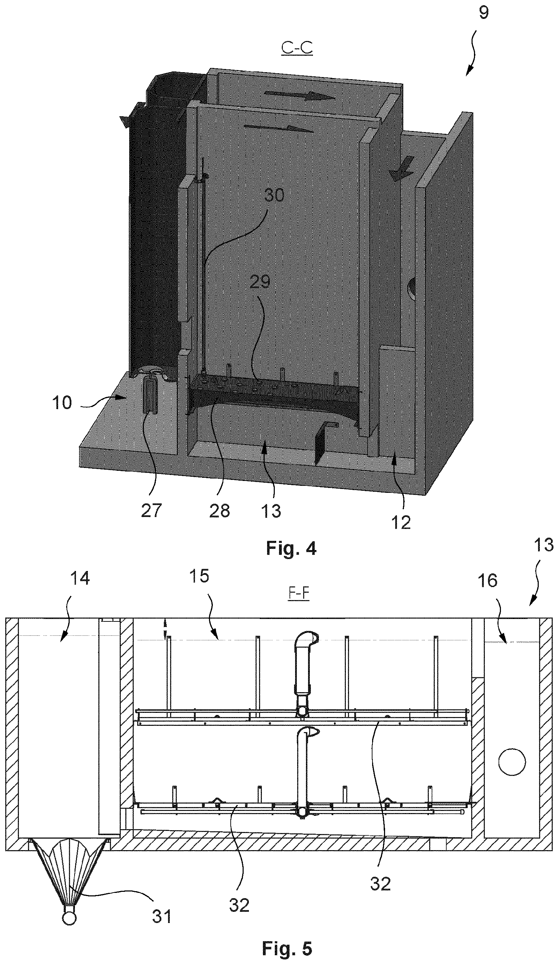

Fig. 4 illustrates a cross-section of the oxygenation system along line C-C. A pump unit 27 is arranged in the input channel 10 and configured to pump the inputted water into the oxygenation chamber 13 at a top level. The oxygenation chamber 13 comprises a platform 28 separating the oxygenation chamber 13 into an upper chamber part and a lower chamber part. The platform 28 has a plurality of nozzles 29 distributed along the surface area of the platform 28. An oxygen supply 30 is arranged within the oxygenation chamber 13 and outlets oxygen in the lower chamber part adjacent to the platform 28. Water is distributed over the lower chamber part via the nozzles 29 and is saturated with oxygen. The saturated water is collected at the bottom of the lower chamber part and is outputted to the output channel 12.

Fig. 5 illustrates a cross-section of the water treatment system 13 along line F-F. The water treatment system 13 comprises a sludge collection system 31 arranged in the bottom surface of the input channel 14. Water is then inputted into the water treatment chamber 15. Here, the water treatment chamber 15 comprises two biological filter units 32 configured for aeration and degassing of the water. The filtered water is then outputted into the output channel 16.

Fig. 6 illustrates a cross-section of the water bypass system 18 of fig. 2. The water bypass system 18 has a screen enclosure 24 positioned relative to the bypass opening 21.

A nozzle is arranged between the bypass opening 21 and the screen enclosure 24. The nozzle comprises a duct 33 extending from a local opening in the joint end sidewall 6 and towards the downstream end of the bypass opening 21. The duct 33 is connected to a tapered end 34 with a plurality of openings formed in the cone shaped surface. The cone shaped portion extends partly past the downstream end of the bypass opening 21 as illustrated in fig. 3.

Saturated water enters 35 the nozzle from the output channel 12 and exits 36 the nozzle at the tapered end 34 at a higher flow velocity. This entrains 37 the bypass water to mix with the water inflow near the water inlets 7.

Fig. 7 illustrates an exemplary embodiment of a modular recirculating aquaculture system 38 according to the present invention. The modular recirculating aquaculture system 38 comprises a number of recirculating aquaculture units 1, 1', 1" arranged relative to each other to form a compact design. Each recirculating aquaculture units 1, 1', 1" may be adapted to different aquacultural applications and/or different types of aquatic organisms.

Here, three recirculating aquaculture units 1, 1', 1" are shown but more or less recirculating aquaculture units may be used.

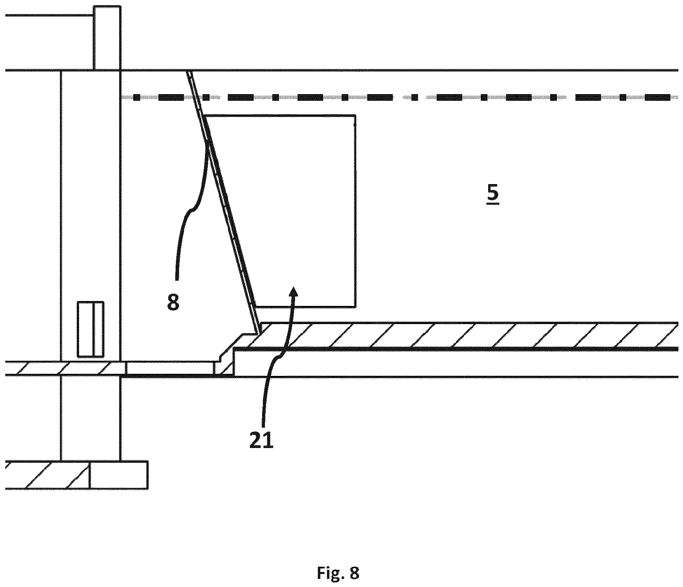

Fig. 8 illustrates another embodiment of the bypass opening 21. The bypass opening 21 in this embodiment is not limited to the upper part of middle wall 5. A bottom of the bypass opening is positioned above the bottom of the raceway such that sediment is prevented from traveling endlessly within the raceway. The water level during normal use is marked with ". _ . _ " in the figure. A top of the bypass opening is positioned below the water level such that the dead fish is not dragged endlessly in the raceway. The exact size and shape of the bypass opening can be chosen by performing small scale experiments such that flow from the inlet side to the outlet side is prevented.

The shown figure is a cross-sectional view through the outlet side and thus the outlet 8 is visible. All other parts of the recirculating aquaculture system may be as shown in the other embodiments.

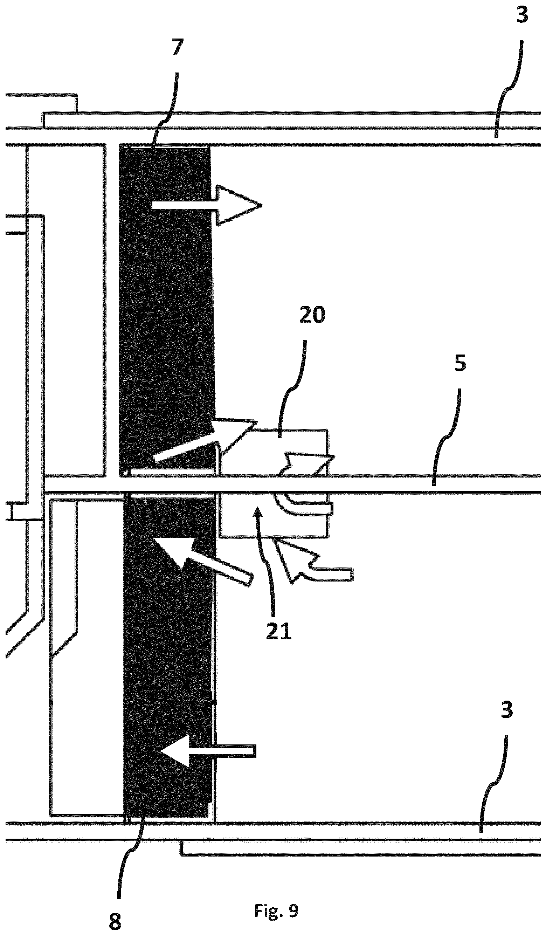

Fig. 9 illustrates an embodiment for controlling water flow through the bypass opening 21. The water flow is in this figure shown as a hollow arrow. The bypass opening 21 is positioned in the middle wall close to the inlets and outlets.

In this embodiment the inlet 7 and outlet 8 comprise sieves or grates or grids near the bypass opening 21 which are angled relative to the longitudinal direction of such that a pressure difference is created between the outlet side and the inlet side which causes water flow from the outlet side and the inlet side.

An extraction outlet 20 is shown in the figure, however it could be placed differently or have a different shape as it does not affect the water flow in the closed state.

## Claims

1. A recirculating aquaculture system (1), comprising:
- a raceway (2) adapted to receive and hold fish, each raceway (2) comprising at least one water inlet (7) and at least one water outlet (8), wherein the raceway (2) has a rectangular profile extending in a longitudinal direction and further in a transverse direction, wherein the raceway (2) further comprising a middle wall (5) extending in the longitudinal direction and separating the water inlets (7) and the water outlets (8), thereby forming a U-shaped channel,
- a water treatment system (13) coupled to the raceway (2), the water treatment system (13) being configured to remove impurities, particles and gasses from water being led out of the raceway (2) via the water outlets (8);
- an oxygenation system (9) coupled to the raceways (2) and the water treatment system (13), the oxygenation system (9) being configured to oxygenate at least part of the water outputted from the water treatment system (13) and to lead the oxygenated water into the raceways (2) via the at least one water inlet (7),
- at least one bypass system (18) arranged relative to the water inlets (7) and water outlets (8) of the at least one raceway (2), the at least one bypass system (18) being configured to bypass a water flow in that raceway (2) so that a portion of the water is bypassed from the water outlets (8) to the water inlets (7).

2. The recirculating aquaculture system according to claim 1, **characterised in that** the at least one water inlet (7) and the at least one water outlet (8) are positioned at a joint end (6) of the rectangular profile.

3. The recirculating aquaculture system according to claim 1 or 2, **characterised in that** wherein the bypass system (18) is arranged within the raceway (2) and positioned downstream relative to the water inlets (7) thereof and/or upstream relative to the water outlets (8) thereof.

4. The recirculating aquaculture system according to one of claims 1 to 3, **characterised in that** the bypass system (18) comprises a bypass opening (21) in the middle wall (5), wherein the bypass opening (21) is arranged near or at the at least one water inlet (7).

5. The recirculating aquaculture system according to claim 4, **characterised in that** the bypass opening (21) is positioned in an upper half of the middle wall (5), wherein the bypass opening (21) is below a water surface during normal operation.

6. The recirculating aquaculture system according to any one of claims 4 to 5, **characterised in that** the bypass system (18) further comprises a screen enclosure (24) adapted for partially enclosing the bypass opening (21) thereby preventing water flow from the water inlets (7) to the water outlet (8) through the bypass opening (21).

7. The recirculating aquaculture system according to claim 6, **characterised in that** the bypass system (18) further comprises a nozzle, optionally a jet nozzle, arranged within the screen enclosure (24).

8. The recirculating aquaculture system according to claim 7, **characterised in that** the nozzle comprises a duct (33) extending from an upstream side of the water inlets (7) and at least partially past the bypass opening (21).

9. The recirculating aquaculture system according to claim 8, **characterised in that** the duct (33) comprises a tapered end (34) shaped to increase a water flow velocity out of the nozzle.

10. The recirculating aquaculture system according to any one of claims 1 to 9, **characterised in that** the raceway (2) further comprising a raceway bottom surface (19) arranged at a sloping angle in the transverse direction relative to the middle wall (5), such that the raceway bottom surface (19) is at a lowest gravitational level at the middle wall (5).

11. The recirculating aquaculture system according to claim 10, **characterised in that** the raceway (2) comprises an extraction outlet (20) located near the water inlets (7) and/or near water outlets (8), the extraction outlet (20) being positioned at the raceway bottom surface (19) at or near the middle wall (5).

12. A recirculating aquaculture system (1) comprising:
- a raceway (2) adapted to receive and hold fish, each raceway (2) comprising at least one water inlet (7) and at least one water outlet (8), wherein the at least one raceway (2) has a rectangular profile extending in a longitudinal direction and further in a transverse direction, wherein the raceway (2) further comprising a middle wall (5) extending in the longitudinal direction and separating the water inlets (7) and the water outlets (8), thereby forming a U-shaped channel,
- an oxygenation system (9) coupled to the raceway (2), the oxygenation system (9) being configured to oxygenate at least part of the water outputted from the raceway (2) and to lead the oxygenated water into the raceway (2) via the at least one water inlet (7),
wherein the raceway (2) comprises an extraction outlet (20) at a raceway bottom surface (19) and the oxygenation system (9) comprises an oxygenation chamber (13) having a chamber bottom surface (25) wherein the chamber bottom surface (25) is at a lower gravitational level than the raceway bottom surface (19).

13. The recirculating aquaculture system according to claim 12, **characterised in that** the recirculating aquaculture system (1) further comprises a water treatment system (13) coupled to the raceway (2) and the oxygenation system (9), the water treatment system (13) being configured to remove impurities, particles and gasses from the water being led out of the raceway (2) via the at least one water outlet (8).

14. The recirculating aquaculture system according to claim 13, **characterised in that** a water treatment bypass (26) adapted for bypassing the water treatment system (13) and leading water from the water outlets (8) to the oxygenation system (9).

15. The recirculating aquaculture system according to anyone of claims 12 to 14, **characterised in that** the raceway bottom surface (19) is arranged at a sloping angle in the transverse direction relative to the middle wall (5), such that the raceway bottom surface (19) is at a lowest gravitational level at the middle wall (5).

16. The recirculating aquaculture system according to anyone of claims 12 to 15, **characterised in that** the extraction outlet (20) is positioned near the water inlet (7) and/or near the water outlet (8).

17. The recirculating aquaculture system according to anyone of claim 12 to 16, **characterised in that** a first extraction outlet (20) is arranged at one side of the middle wall (5) and a second extraction outlet (20) is arranged at the opposite side of the middle wall (20), or a common extraction outlet (20) extended across both sides of the middle wall (5).

18. The recirculating aquaculture system according to any one of claims 12 to 17, **characterised in that** the water treatment bypass comprises valves for opening or closing a bypass flow path from the water outlets (8) to the oxygenation system (9).

19. The recirculating aquaculture system according to any one of claims 12 to 18, **characterised in that** the oxygenation system (9) comprises a pump (27) for pumping water into the oxygenation chamber (13).

20. The recirculating aquaculture system according to claim 19, **characterised in that** the oxygenation chamber (13) extends from below the raceway bottom surface (19) to above the water level of the raceway (2) during use.

21. The recirculating aquaculture system according to any one of claims 12 to 19, **characterised in that** the oxygenation chamber (13) further comprising a platform (28) dividing the oxygenation chamber (13) in an upper part and a lower part, wherein the platform (28) comprises a plurality of nozzles (29), and the oxygenation chamber (13) comprises an oxygen supply (30) having a gas outlet below the platform (28).

22. A modular recirculating aquaculture system comprising a first recirculating aquaculture unit (1) and at least a second recirculating aquaculture unit (1', 1") arranged adjacent to the first recirculating aquaculture unit (1), wherein at least one of the first and second recirculating aquaculture units (1, 1', 1") is configured according to any one of claims 1 to 12 and/or according to any one of claims 12 to 21.

23. A method of removing fish from a recirculating aquaculture system (1) according to any one of claims 12 to 21, comprising the steps of:
- activating the water treatment bypass;
- lowering a water level inside the raceway (2) by controlling water flow through the extraction outlet (20), while
- removing fish through the extraction outlet (20).
